# EUROPÄISCHE PATENTSCHRIFT

(11) **EP 2 162 635 B1**
(45) Veröffentlichungstag und Bekanntmachung des Hinweises auf die Patenterteilung: **16.11.2011**
(21) Anmeldenummer: 08759159.0
(22) Anmeldetag: 11.06.2008
(51) Int. Cl.: F16H 3/00, F16H 3/091

(54) **ZAHNRÄDERWECHSELGETRIEBE**
TOOTHED-WHEEL VARIABLE-SPEED TRANSMISSION
BOITE DE VITESSES A ENGRENAGES

(30) Priorität: 26.06.2007 DE 102007029634
(43) Veröffentlichungstag der Anmeldung: 17.03.2010
(73) Patentinhaber: Daimler AG, 70327 Stuttgart (DE)
(72) Erfinder: GITT, Carsten, 70376 Stuttgart (DE)
(74) Vertreter: Moore, David Simon
(86) Internationale Anmeldenummer: PCT/EP2008/004640
(87) Internationale Veröffentlichungsnummer: WO 2009/000414

(56) Entgegenhaltungen:
- WO-A-2006/049096
- DE-A1- 4 122 628
- DE-A1- 10 037 398

## Beschreibung

Die Erfindung betrifft ein Zahnräderwechselgetriebe nach dem Oberbegriff des Patentanspruchs 1.

Es sind bereits Zahnräderwechselgetriebe mit zumindest zwei Lastschaltkupplungen, mit in Zahnradebenen angeordneten Zahnrädern sowie mit einer Eingangswelle und einer Ausgangswelle bekannt, die über die zumindest zwei im Kraftfluss parallel zueinander angeordneten Lastschaltkupplungen und über die in Zahnradebenen angeordneten Zahnräder miteinander wirkungsmäßig verbindbar sind.

Ein gattungsgemäßes Zahnräderwechselgetriebe mit zwei Lastschaltkupplungen, genau sechs Zahnradebenen und genau drei beidseitig schaltbaren Schalteinheiten ist dem Ausführungsbeispiel gemäß Figur 9 der DE 100 37 398 A1 zu entnehmen. Hier sind von den sechs Vorwärtsgängen zum einen die Gänge I bis IV sequentiell lastschaltbar und zum anderen die Doppelhoch- bzw. Doppelrückschaltung zwischen den Gängen IV und VI bzw. III und V lastschaltbar.

Der Erfindung liegt insbesondere die Aufgabe zugrunde, ein Zahnräderwechselgetriebe mit einem besonders hohen Schaltkomfort bei besonders kompakter Bauweise bereitzustellen. Sie wird gemäß der Erfindung durch die Merkmale der unabhängigen Patentansprüche gelöst. Weitere Ausgestaltungen ergeben sich aus den Unteransprüchen.

Die Erfindung geht aus von einem Zahnräderwechselgetriebe mit zumindest zwei Lastschaltkupplungen, mit in Zahnradebenen angeordneten Zahnrädern sowie mit einer Eingangswelle und einer Ausgangswelle, die über die zumindest zwei im Kraftfluss parallel zueinander angeordneten Lastschaltkupplungen und über die in Zahnradebenen angeordneten Zahnräder miteinander wirkungsmäßig verbindbar sind.

Es wird vorgeschlagen, dass das Zahnräderwechselgetriebe zumindest sechs Vorwärtsgetriebegänge umfasst, die durchgehend sequentiell lastschaltbar sind. Unter "sequentiell lastschaltbaren" Getriebegängen soll verstanden werden, dass von einem Getriebegang in einen benachbarten Getriebegang geschaltet werden kann, ohne dass ein Kraftfluss von der Eingangswelle zur Ausgangswelle unterbrochen wird. Dazu müssen benachbarte Getriebegänge jeweils unterschiedlichen Lastschaltkupplungen zugeordnet sein. Unter "benachbarten Getriebegängen" sollen Getriebegänge verstanden werden, die von ihrer Übersetzung nebeneinander angeordnet sind. Durch ein sequentiell schaltbares Getriebe kann ein besonders hoher Schaltkomfort bei besonders kompakter Bauweise realisiert werden.

Des Weiteren werden die sechs durchgehend sequentiell lastschaltbaren Vorwärtsgetriebegänge und zwei Rückwärtsgetriebegänge mithilfe von genau sechs Zahnradebenen und genau drei beidseitig schaltbaren Schalteinheiten bzw. Schaltmuffen gebildet. Dadurch können Bauteile, Bauraum und Montageaufwand reduziert werden.

Weiter wird vorgeschlagen, dass zumindest zwei Zahnradebenen als Eingangskonstanten ausgebildet sind. Dadurch können zumindest sechs sequentiell lastschaltbare Vorwärtsgetriebegänge einfach realisiert werden. Unter "vorgesehen" soll insbesondere speziell ausgestattet, ausgelegt und/oder programmiert verstanden werden. Ferner soll unter "gemeinsam" insbesondere verstanden werden, dass diese gleichzeitig zur Bildung eines Vorwärtsgetriebegangs genutzt werden.

Ferner wird vorgeschlagen, dass die zwei Zahnradebenen gemeinsam zur Bildung zumindest eines Vorwärtsgetriebegangs vorgesehen sind und in diesem Vorwärtsgetriebegang die eine Zahnradebene als Eingangskonstante dient und die andere Zahnradebene zur Übertragung der Antriebsleistung auf die Abtriebswelle dient. Dadurch kann das Zahnräderwechselgetriebe besonders kompakt konstruiert werden.

Ferner ist es vorteilhaft, wenn eine Zahnradebene dazu vorgesehen ist, in Kombination mit einer der Eingangskonstanten zumindest zwei unterschiedlich übersetzte Vorwärtsgetriebegänge zu bilden. Dadurch wird ein vorteilhaftes Schaltverhalten der Vorwärtsgetriebegänge erreicht.

In einer weiteren Ausgestaltung der Erfindung wird vorgeschlagen, dass das Zahnräderwechselgetriebe zumindest zwei unterschiedlich übersetzte Rückwärtsgetriebegänge umfasst. Dadurch kann eine erhöhte Flexibilität erreicht werden.

Weiter wird vorgeschlagen, dass die Rückwärtsgetriebegänge dadurch gebildet sind, dass eine Zahnradebene, die eine Umkehreinheit umfasst, in Kombination mit jeweils einer der Eingangskonstanten betreibbar ist. Dadurch kann das Zahnräderwechselgetriebe noch kompakter gestaltet werden.

Insbesondere ist es vorteilhaft, wenn die Rückwärtsgetriebegänge sequentiell lastschaltbar sind, da dadurch der Schaltkomfort weiter erhöht werden kann.

Vorzugsweise sind sämtliche Stufensprünge ab einem zweiten Vorwärtsgetriebegang in Richtung zu höheren Vorwärtsgetriebegängen abnehmend ausgebildet. Unter einem "Stufensprung" soll insbesondere das Verhältnis einer Getriebeübersetzung eines Getriebegangs zu einer Getriebeübersetzung eines nächst höheren Getriebegangs verstanden werden. Durch eine solche progressive Gangabstufung kann eine vorteilhafte Getriebeabstufung erreicht werden.

In einer alternativen Ausführung sind sämtliche Stufensprünge ab einem zweiten Vorwärtsgetriebegang in Richtung zu höheren Vorwärtsgetriebegängen teilweise abnehmend und teilweise gleich bleibend ausgebildet. Durch eine solche quasi progressive Gangabstufung kann eine ebenfalls vorteilhafte Getriebe-' abstufung erreicht werden.

In einer weiteren alternativen Ausführung sind sämtliche Stufensprünge zwischen je zwei benachbarten Vorwärtsgetriebegängen annähernd gleich bleibend ausgebildet. Auch durch eine solche geometrische Gangabstufung kann eine vorteilhafte Getriebeabstufung erreicht werden.

Ferner wird eine Regel- und/oder Steuereinheit vorgeschlagen, die dazu vorgesehen ist, zumindest zwei Getriebegänge, von denen einer der Gruppe der geraden Vorwärtsgänge und ein anderer der Gruppe der ungeraden Vorwärtsgänge angehört, parallel zu schalten und/oder zu trennen. Unter "parallel geschaltet" soll insbesondere verstanden werden, dass zumindest zwei Getriebegänge gleichzeitig mittels der Schiebemuffen im Getriebe eingelegt sind und gleichzeitig die zu beiden Vorwärtsgängen jeweils zugehörigen Lastschaltkupplungen schlupfend betrieben werden. Durch eine parallele Schaltung zumindest zweier Getriebegänge werden ein erhöhter Kraftfluss, insbesondere für einen Anfahrmodus und/oder einen Beschleunigungsmodus, und/oder eine vorteilhafte Abnutzung der Lastschaltkupplungen ermöglicht.

Weiter wird vorgeschlagen, dass die Regel- und/oder Steuereinheit dazu vorgesehen ist, abhängig von wenigstens einer Kenngröße zumindest einen Getriebegang auszuwählen und/oder zu schalten. Vorzugsweise kann die Regel- und/oder Steuereinheit in wenigstens einem Anfahrmodus zwei Getriebegänge parallel schalten und anschließend abhängig von wenigstens einer Kenngröße auswählen, welcher Getriebegang bzw. welche Lastschaltkupplung geschaltet bleibt bzw. komplett geschlossen wird und welche Lastschaltkupplung geöffnet wird. Eine Kenngröße kann dabei insbesondere von einer Ladezustandskenngröße und/oder einer Fahrbahnsteigungskenngröße und/oder einer Antriebsdrehmomentbedarfskenngröße gebildet sein. Auch eine Auswahl der zum Anfahren geschalteten Gänge durch die Regel- und/oder Steuereinheit abhängig von der Kenngröße ist ferner denkbar. So kann beispielsweise gewählt werden, ob zum Anfahren ein erster und ein zweiter Vorwärtsgetriebegang oder ein zweiter und ein dritter Vorwärtsgetriebegang geschaltet werden. In analoger Weise kann die zuvor beschriebene Vorgehensweise auch auf den parallelen Betrieb zweier Rückwärtsgänge bei schlupfend betriebenen Lastschaltkupplungen und anschließender kenngrößenabhängiger Öffnung der einen und kompletten Schließung der anderen Lastschaltkupplung angewendet werden. Durch eine entsprechend ausgestaltete Regel- und/oder Steuereinheit können ein erhöhter Kundennutzen und ein erhöhter Komfort bei einer vorteilhaft kleinen Dimensionierung der Lastschaltkupplungen erreicht werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: einen schematischen Aufbau eines Zahnräderwechselgetriebes und
- Fig. 2: Schaltzustände des Zahnräderwechselgetriebes aus Figur 1.

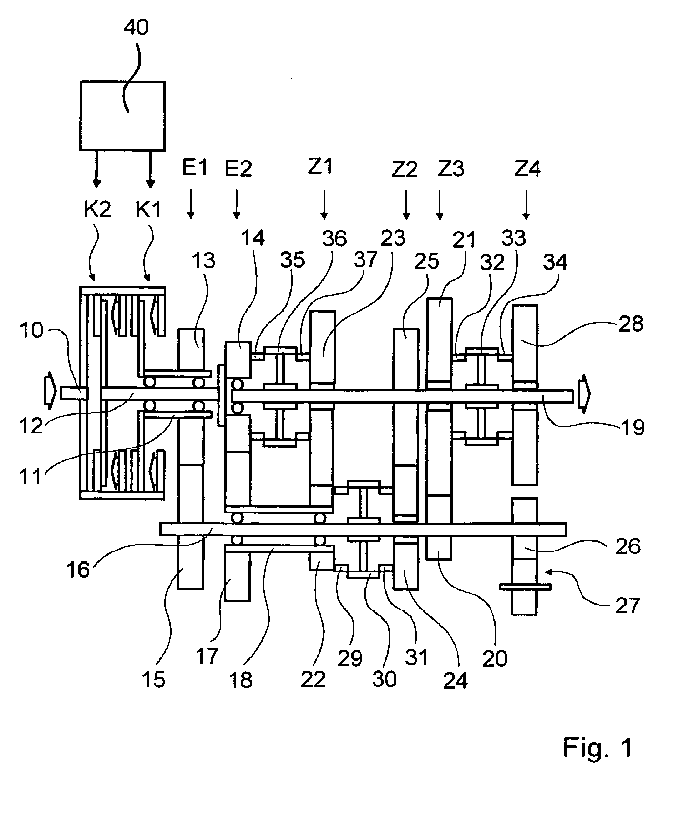

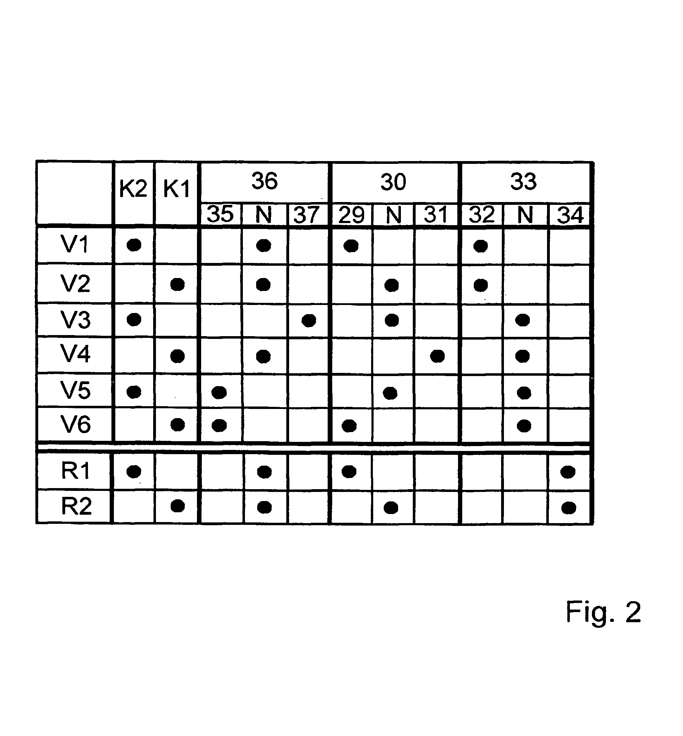

Figur 1 zeigt einen schematischen Aufbau eines erfindungsgemäßen Zahnräderwechselgetriebes mit sechs sequentiell schaltbaren Vorwärtsgetriebegängen V1 - V6 und zwei sequentiell schaltbaren Rückwärtsgetriebegängen R1, R2 (Figur 2). Bei dem Zahnräderwechselgetriebe ist eine Eingangswelle 10 über eine erste Lastschaltkupplung K1 mit einer ersten, als Hohlwelle ausgebildeten Zwischenwelle 11 verbunden. Die erste Zwischenwelle 11 ist konzentrisch zu einer zweiten Zwischenwelle 12 ausgeführt und auf dieser gelagert. Die zweite Zwischenwelle 12 ist über eine zweite Lastschaltkupplung K2 mit der Eingangswelle 10 verbindbar.

Auf den Zwischenwellen 11, 12 ist jeweils ein Festrad 13, 14 angeordnet. Das Festrad 13 auf der ersten Zwischenwelle 11 kämmt mit einem Festrad 15 auf einer ersten Vorlegewelle 16. Das Festrad 13 und das Festrad 15 bilden eine erste Eingangskonstante E1.

Das Festrad 14 auf der zweiten Zwischenwelle 12 kämmt mit einem Festrad 17 auf einer zweiten Vorlegewelle 18. Die zweite Vorlegewelle 18 ist konzentrisch zur ersten Vorlegewelle 16 ausgebildet und durchsetzt diese, wobei die zweite Vorlegewelle 18 auf der ersten Vorlegewelle 16 gelagert ist. Das Festrad 14 und das Festrad 17 bilden eine zweite Eingangskonstante E2.

Eine Ausgangswelle 19 ist mit einem Ende mit einem nicht näher dargestellten Antriebsstrang verbunden. Mit einem anderen Ende ist sie durch eine geeignete Vorrichtung drehbar am Festrad 14 der zweiten Zwischenwelle 12 gelagert. Die Eingangswelle 10 und die Ausgangswelle 19 liegen koaxial zueinander.

Die Eingangswelle 10 und die Ausgangswelle 19 können zur Bildung der sechs Vorwärtsgetriebegänge V1 - V6 und der zwei Rückwärtsgetriebegänge R1, R2 über sechs Zahnradebenen E1, E2, Z1 - Z4 wirkungsmäßig miteinander verbunden werden. Zwei Zahnradebenen werden durch die Eingangskonstanten E1, E2 gebildet, die zusammen mit den drei weiteren Zahnradebenen Z1, Z2, Z3 für die Bildung der Vorwärtsgetriebegänge V1 - V6 vorgesehen sind, wobei einer dieser Vorwärtsgetriebegänge V5 durch die drehfeste Verbindung der Zwischenwelle 12 mit der Ausgangswelle 19 gebildet wird. Die sechste Zahnradebene Z4 ist für die Bildung der Rückwärtsgetriebegänge R1, R2 vorgesehen. Außerdem umfasst das Zahnräderwechselgetriebe drei Schalteinheiten, die jeweils eine Schaltmuffe 36, 30, 33 und jeweils zwei Kupplungskörper 35, 37, 29, 31, 32, 34 umfassen. Die Kupplungskörper 35, 37, 29, 31, 32, 34 sind dazu vorgesehen, mithilfe der Schaltmuffen 36, 30, 33 Losräder 23, 24, 21, 28 mit den Wellen 16, 19, auf denen die Losräder 23, 24, 21, 28 angeordnet sind, drehfest zu verbinden bzw. die Wellen 12 mit 19 bzw. 18 mit 16 drehfest zu verbinden.

Zu diesem Zweck sind die Schaltmuffen 36, 30, 33 jeweils drehfest aber axial verschiebbar auf den entsprechenden Wellen 16, 19 befestigt.

Eine prinzipielle Eigenschaft des Zahnräderwechselgetriebes ist, dass ein Stufensprung zwischen dem ersten und zweiten Vorwärtsgetriebegang V1, V2 identisch ist mit dem Stufensprung zwischen dem fünften und sechsten Vorwärtsgetriebegang V5, V6.

Außerdem ist eine progressive Gangabstufung ab dem zweiten Vorwärtsgetriebegang V2 realisiert. Alternativ kann auch eine Gangabstufung realisiert werden, bei der der Stufensprung zwischen zwei benachbarten Vorwärtsgetriebegängen annähernd gleich ist.

Der erste und der zweite Vorwärtsgetriebegang V1, V2 werden über die Zahnradebene Z3 gebildet. Die Zahnradebene Z3 umfasst ein Festrad 20 auf der ersten Vorlegewelle 16, das mit dem Losrad 21 auf der Ausgangswelle 19 kämmt. Der erste Vorwärtsgetriebegang V1 besitzt das Übersetzungsverhältnis 5,449, der zweite Vorwärtsgetriebegang V2 3,948.

Ein dritter Vorwärtsgetriebegang V3 wird über die Zahnradebene Z1 gebildet. Die Zahnradebene Z1 besitzt ein auf der zweiten Vorlegewelle 18 befestigtes Festrad 22, welches mit einem Losrad 23 kämmt, das auf der Ausgangswelle 19 sitzt. Der dritte Vorwärtsgetriebegang V3 besitzt das Übersetzungsverhältnis 2,323.

Ein vierter Vorwärtsgetriebegang V4 wird über die Zahnradebene Z2 gebildet, die das Losrad 24 auf der ersten Vorlegewelle 16 umfasst, das mit einem Festrad 25 auf der Ausgangswelle 19 kämmt. Der vierte Vorwärtsgetriebegang V4 besitzt das Übersetzungsverhältnis 1,470.

Ein fünfter Vorwärtsgetriebegang V5 ist als direkter Vorwärtsgetriebegang ausgelegt, bei dem die Eingangswelle 10 und die Ausgangswelle 19 drehfest miteinander verbunden sind. Der fünfte Vorwärtsgetriebegang V5 hat als direkter Getriebegang das Übersetzungsverhältnis 1,000.

Ein sechster Vorwärtsgetriebegang V6 wird über die Eingangskonstanten E1 und E2 gebildet und hat das Übersetzungsverhältnis 0,725.

Ein erster und ein zweiter Rückwärtsgetriebegang R1, R2 werden über die Zahnradebene Z4 gebildet. Die Zahnradebene Z4 umfasst ein Festrad 26 und eine Umkehreinheit 27, die ein auf einer eigenen Welle drehfest angeordnetes Zwischenrad umfasst und die dazu vorgesehen ist, eine zu einer Drehrichtung der Vorwärtsgetriebegänge V1 - V6 entgegen gesetzte Drehrichtung der Ausgangswelle 19 zu bilden, sowie ein Losrad 28, das auf der Ausgangswelle 19 angeordnet ist. Alternativ kann die Umkehreinheit 27 ein auf einer drehfesten Achse drehbar gelagertes Zwischenrad umfassen.

Zur Bildung des ersten Vorwärtsgetriebegangs V1 wird die zweite Vorlegewelle 18 über den Kupplungskörper 29 und die Schaltmuffe 30 drehfest mit der zweiten Vorlegewelle 18 verbunden. Dann wird das Losrad 21 der Zahnradebene Z3 über den Kupplungskörper 32 und die Schaltmuffe 33 drehfest mit der Ausgangswelle 19 verbunden.

Der zweite Vorwärtsgetriebegang V2 ist dann bereits gebildet, da die erste Vorlegewelle 16 über die Zahnradebene Z3, den Kupplungskörper 32 und die Schaltmuffe 33 mit der Ausgangswelle 19 verbunden ist. In einem Anfahrmodus werden der erste und der zweite Vorwärtsgetriebegang V1, V2 parallel geschaltet, indem beide Lastschaltkupplungen K1, K2 durch eine Steuer- und Regeleinheit 40 zumindest teilweise geschlossen werden, was gleichbedeutend mit einem schlupfenden Betrieb ist. Das Anfahren erfolgt also in einer primären Phase gleichzeitig über die Vorwärtsgänge V1 und V2. Ein solcher Anfahrmodus über beide Lastschaltkupplungen K1, K2 ist insbesondere vorteilhaft einsetzbar, wenn der Stufensprung zwischen dem ersten Vorwärtsgetriebegang V1 und dem zweiten Vorwärtsgetriebegang V2 vergleichsweise klein ist, also beispielsweise kleiner als der Stufensprung zwischen den Vorwärtsgängen V2 und V3, da in einem solchen Fall die realisierbaren Differenzdrehzahlen in den schlupfend betriebenen Lastschaltkupplungen K1 und K2 vergleichsweise gering sind und somit in den Lastschaltkupplungen K1 und K2 übermäßiger Verschleiß und/oder übermäßiger Wärmeeintrag durch besonders hohe Reibleistungen weitgehend vermieden werden können.

Abhängig von einer oder mehreren Kenngrößen, wie beispielsweise Beladungszustand des Fahrzeugs, Steigung oder Gefälle der Fahrbahn sowie Antriebsdrehmomentvorgabe durch den Fahrer über die Stellung des Fahrpedals, wird nach der zuvor beschriebenen primären Anfahrphase über die zwei Vorwärtsgänge V1 und V2 durch die Steuer- und Regeleinheit 40 festgelegt, ob die Antriebsleistung nach der besagten primären Anfahrphase komplett von dem ersten Vorwärtsgetriebegang V1 oder dem zweiten Vorwärtsgetriebegang V2 übertragen werden soll. Hierzu wird entweder die Lastschaltkupplung K2 bei gleichzeitiger sukzessiver Öffnung der Lastschaltkupplung K1 sukzessive geschlossen oder die Lastschaltkupplung K1 bei gleichzeitiger sukzessiver Öffnung der Lastschaltkupplung K2 sukzessive geschlossen.

Um unter Last vom ersten Vorwärtsgetriebegang V1 in den zweiten Vorwärtsgetriebegang V2 zu schalten, wird durch die Steuer- und Regeleinheit 40 von der zweiten Lastschaltkupplung K2 auf die erste Lastschaltkupplung K1 geschaltet, indem die Lastschaltkupplung K1 bei gleichzeitiger sukzessiver Öffnung der Lastschaltkupplung K2 sukzessive geschlossen wird. Die Schaltmuffe 30 kann anschließend lastfrei ausgekuppelt werden.

Um den dritten Vorwärtsgetriebegang V3 zu bilden, wird das Festrad 22 der Zahnradebene Z1 über den Kupplungskörper 37 und die an der Ausgangswelle 19 drehfest aber axial verschiebbar befestigten Schaltmuffe 36 mit der Ausgangswelle 19 drehfest verbunden. Dadurch sind die zweite Vorlegewelle 18 und die Ausgangswelle 19 miteinander verbunden. Um unter Last vom zweiten Vorwärtsgetriebegang V2 in den dritten Vorwärtsgetriebegang V3 zu schalten, wird durch die Steuer- und Regeleinheit 40 von der ersten Lastschaltkupplung K1 auf die zweite Lastschaltkupplung K2 geschaltet, indem die Lastschaltkupplung K2 bei gleichzeitiger sukzessiver Öffnung der Lastschaltkupplung K1 sukzessive geschlossen wird. Die Schaltmuffe 33 kann anschließend lastfrei ausgekuppelt werden.

Zur Bildung des vierten Vorwärtsgetriebegangs V4 wird die erste Vorlegewelle 16 über einen Kupplungskörper 31 und die Schaltmuffe 30 drehfest mit dem Losrad 24 der Zahnradebene Z2 verbunden, und somit wird über das Festrad 25 eine Verbindung zur Ausgangswelle 19 hergestellt. Um unter Last vom dritten Vorwärtsgetriebegang V3 in den vierten Vorwärtsgetriebegang V4 zu schalten, wird durch die Steuer- und Regeleinheit 40 von der zweiten Lastschaltkupplung K2 auf die erste Lastschaltkupplung K1 geschaltet, indem die Lastschaltkupplung K1 bei gleichzeitiger sukzessiver Öffnung der Lastschaltkupplung K2 sukzessive geschlossen wird. Die Schaltmuffe 36 kann anschließend lastfrei ausgekuppelt werden.

Der fünfte Vorwärtsgetriebegang V5 wird gebildet, indem das Festrad 14 über einen Kupplungskörper 35 und die Schaltmuffe 36 drehfest mit der Ausgangswelle 19 verbunden wird. Dadurch besteht eine drehfeste Verbindung der zweiten Zwischenwelle 12 mit der Ausgangswelle 19. Um unter Last vom vierten Vorwärtsgetriebegang V4 in den fünften Vorwärtsgetriebegang V5 zu schalten, wird durch die Steuer- und Regeleinheit 40 von der ersten Lastschaltkupplung K1 auf die zweite Lastschaltkupplung K2 geschaltet, indem die Lastschaltkupplung K2 bei gleichzeitiger sukzessiver Öffnung der Lastschaltkupplung K1 sukzessive geschlossen wird. Die Schaltmuffe 30 kann anschließend lastfrei ausgekuppelt werden.

Der sechste Vorwärtsgetriebegang V6 wird gebildet, indem die erste Vorlegewelle 16 über den Kupplungskörper 29 und die Schaltmuffe 30 drehfest mit der zweiten Vorlegewelle 18 verbunden wird. Die zweite Vorlegewelle 18 ist durch den Kupplungskörper 35 und die Schaltmuffe 36 mit der Ausgangswelle 19 verbunden. Um unter Last vom fünften Vorwärtsgetriebegang V5 in den sechsten Vorwärtsgetriebegang V6 zu schalten, wird durch die Steuer- und Regeleinheit 40 von der zweiten Lastschaltkupplung K2 auf die erste Lastschaltkupplung K1 geschaltet, indem die Lastschaltkupplung K1 bei gleichzeitiger sukzessiver Öffnung der Lastschaltkupplung K2 sukzessive geschlossen wird.

Um die beiden Rückwärtsgetriebegänge R1, R2 zu bilden, wird das Losrad 28 der Zahnradebene Z4 über den Kupplungskörper 34 und die Schaltmuffe 33 drehfest mit der Ausgangswelle 19 verbunden. Der zweite Rückwärtsgetriebegang R2 ist bereits so gebildet. Zur Bildung des ersten Rückwärtsgetriebegangs R1 wird außerdem die zweite Vorlegewelle 18 über den Kupplungskörper 29 und die Schaltmuffe 30 drehfest mit der ersten Vorlegewelle 16 verbunden. Da dann beide Rückwärtsgetriebegänge R1, R2 gleichzeitig gebildet sind, sind die beiden Rückwärtsgetriebegänge R1, R2 untereinander lastschaltbar. Bei geeigneter Stellung aller Schaltmuffen 30, 33, 36 kann zwischen den beiden Rückwärtsgetriebegängen R1, R2 nur durch ein Wechseln zwischen den Lastschaltkupplungen K1, K2 geschaltet werden.

## Patentansprüche

1. Zahnräderwechselgetriebe mit zumindest zwei Lastschaltkupplungen (K1, K2), mit in genau sechs Zahnradebenen (E1, E2, Z1, Z2, Z3, Z4) angeordneten Zahnrädern sowie mit einer Eingangswelle (10) und einer Ausgangswelle (19), die über die zumindest zwei im Kraftfluss parallel zueinander angeordneten Lastschaltkupplungen (K1, K2) und über die in den sechs Zahnradebenen (E1, E2, Z1, Z2, Z3, Z4) angeordneten Zahnräder mithilfe von genau drei beidseitig schaltbaren Schalteinheiten bzw. Schaltmuffen (30, 33, 36) miteinander wirkungsmäßig verbindbar sind, mit zumindest sechs Vorwärtsgetriebegängen (V1 - V6), und zumindest zwei Zahnradebenen (E1, E2) als Eingangskons- tanten ausgebildet sind **dadurch gekennzeichnet, dass**
durch eine Zuordnung der benachbarten Getriebegänge (V1 - V6) zu jeweils unterschiedlichen Lastschaltkupplungen (K1, K2) sechs durchgehend sequentiell lastschaltbare Vorwärtsgetriebegänge (V1 - V6) sowie zwei Rückwärtsgetriebegänge (R1, R2) gebildet sind

2. Zahnräderwechselgetriebe nach Anspruch 1,
**dadurch gekennzeichnet, dass**
die zwei Zahnradebenen (E1, E2) gemeinsam zur Bildung zumindest eines Vorwärtsgetriebegangs (V6) vorgesehen sind, und in diesem Vorwärtsgetriebegang (V6) die eine Zahnradebene (E1) als Eingangskonstante dient und die andere Zahnradebene (E2) zur Übertragung der Antriebsleistung auf die Abtriebswelle (19) dient.

3. Zahnräderwechselgetriebe nach Anspruch 1 oder 2,
**dadurch gekennzeichnet, dass**
dass eine Zahnradebene (Z3) dazu vorgesehen ist, in Kombination mit einer der Eingangskonstanten (E1, E2) zumindest zwei unterschiedlich übersetzte Vorwärtsgetriebegänge (V1, V2) zu bilden.

4. Zahnräderwechselgetriebe nach einem der vorhergehenden Ansprüche,
**gekennzeichnet durch**
zumindest zwei unterschiedlich übersetzte Rückwärtsgetriebegänge (R1, R2).

5. Zahnräderwechselgetriebe nach Anspruch 4,
**dadurch gekennzeichnet, dass**
die Rückwärtsgetriebegänge (R1, R2) dadurch gebildet sind, dass eine Zahnradebene (Z4), die eine Umkehreinheit (27) umfasst, in Kombination mit jeweils einer der Eingangskonstanten (E1, E2) betreibbar ist.

6. Zahnräderwechselgetriebe nach Anspruch 4 oder 5,
**dadurch gekennzeichnet, dass**
die Rückwärtsgetriebegänge (R1, R2) sequentiell lastschaltbar sind.

7. Zahnräderwechselgetriebe nach einem der vorhergehenden Ansprüche,
**dadurch gekennzeichnet, dass**
sämtliche Stufensprünge ab einem zweiten Vörwärtsgetriebegang (V2) in Richtung zu höheren Vorwärtsgetriebegängen (V2 - V6) abnehmend ausgebildet sind.

8. Zahnräderwechselgetriebe nach einem der Ansprüche 1 bis 6,
**dadurch gekennzeichnet, dass**
sämtliche Stufensprünge ab einem zweiten Vorwärtsgetriebegang (V2) in Richtung zu höheren Vorwärtsgetriebegängen (V2 - V6) teilweise abnehmend und teilweise gleich bleibend ausgebildet sind.

9. Zahnräderwechselgetriebe nach einem der Ansprüche 1 bis 6,
**dadurch gekennzeichnet, dass**
sämtliche Stufensprünge zwischen je zwei benachbarten Vorwartsgetriebegängen (V1 - V6) annähernd gleich bleibend ausgebildet sind.

10. Zahnräderwechselgetriebe nach einem der vorhergehenden Ansprüche,
**gekennzeichnet durch**
eine Regel- und/oder Steuereinheit (40), die dazu vorgesehen ist, zumindest zwei Getriebegänge (V1, V2), von denen einer der Gruppe der geraden Vorwärtsgänge (V2, V4, V6) und ein anderer der Gruppe der ungeraden Vorwärtsgänge (V1, V3, V5) angehört, parallel zu schalten und/oder zu trennen.

11. Zahnräderwechselgetriebe nach Anspruch 10,
**dadurch gekennzeichnet, dass**
die Regel- und/oder Steuereinheit (40) dazu vorgesehen ist, abhängig von wenigstens einer Kenngröße, zumindest einen Getriebegang (V1) auszuwählen und/oder zu schalten.

## Claims

1. Toothed-wheel variable-speed transmission, comprising at least two powershift clutches (K1, K2), gears arranged in precisely six gear planes (E1, E2, Z1, Z2, Z3, Z4), an input shaft (10) and an output shaft (19) which can be actively connected to each other via the at least two powershift clutches (K1, K2) arranged parallel to each other in the power flow and via the gears arranged in the six gear planes (E1, E2, Z1, Z2, Z3, Z4) by means of precisely three two-way shiftable selector units or selector sleeves (30, 33, 36), at least six forward gears (V1 - V6) and at least two gear planes (E1, E2) designed as input constants, **characterised in that**
six sequentially load-changeable forward gears (V1 - V6) and two reverse gears (R1, E2) are formed by assigning adjacent gears (V1 - V6) to different powershift clutches (K1, K2).

2. Toothed-wheel variable-speed transmission according to claim 1, **characterised in that**
the two gear planes (E1, E2) are jointly provided to form at least one forward gear (V6), and **in that** in this forward gear (V6) one gear plane (E1) serves as input constant and the other gear plane (E2) is used to transmit the drive power to the output shaft (19).

3. Toothed-wheel variable-speed transmission according to claim 1 or 2, **characterised in that**
one gear plane (Z3) is provided to form, in combination with one of the input constants (E1, E2), at least two forward gears (V1, V2) having different ratios.

4. Toothed-wheel variable-speed transmission according to claim 1 or 2, **characterised by**
at least two reverse gears (R1, R2) having different ratios.

5. Toothed-wheel variable-speed transmission according to claim 4, **characterised in that**
the reverse gears (R1, R2) are formed by providing that one gear plane (Z4) which comprises a reversing unit (27) can be operated in combination with either of the two input constants (E1, E2).

6. Toothed-wheel variable-speed transmission according to claim 4 or 5, **characterised in that**
the reverse gears (R1, R2) are sequentially load-changeable.

7. Toothed-wheel variable-speed transmission according to any of the preceding claims,
**characterised in that**
all step changes from a second forward gear (V2) are designed to be decreasing towards higher forward gears (V2 - V6).

8. Toothed-wheel variable-speed transmission according to any of claims 1 to 6,
**characterised in that**
all step changes from a second forward gear (V2) are designed to be partially decreasing and partially constant towards higher forward gears (V2 - V6).

9. Toothed-wheel variable-speed transmission according to any of claims 1 to 6,
**characterised in that**
all step changes between adjacent forward gears (V1 - V6) are designed to be approximately constant.

10. Toothed-wheel variable-speed transmission according to any of the preceding claims,
**characterised by**
a closed- and/or open-loop control unit (40) which is provided to connect in parallel and/or to separate at least two gears (V1, V2), of which one belongs to the group of even-numbered forward gears (V2, V4, V6) and the other belongs to the group of odd-numbered forward gears (V1, V3, V5).

11. Toothed-wheel variable-speed transmission according to claim 10, **characterised in that**
the closed- and/or open-loop control unit (40) is provided to select and/or engage at least one gear (V1) in dependence on at least one characteristic value.

## Revendications

1. Boîte de vitesses à engrenages comportant au moins deux embrayages couplables sous charge (K1, K2), des engrenages montés dans exactement six plans d'engrenage (E1, E2, 21, Z2, Z3, Z4) ainsi qu'un arbre d'entrée (10) et un arbre de sortie (19) qui sont en liaison coopérante via au moins les deux embrayages couplables sous charges (K1, K2) montés en parallèle et en transfert de force, et via lesdits engrenages montés dans les six plans d'engrenage (E1, E2, Z1, Z2, Z3, Z4) au moyen d'exactement trois unités de commutation couplables des deux côtés ou de manchons coulissants (30, 33, 36), au moins six rapports de vitesse avant (VI - V6), et au moins deux plans d'engrenage (E1, E2) étant conçus comme des constantes d'entrées, **caractérisée en ce que** deux rapports de vitesse avant (V1 - V6) couplables sous charge, séquentiellement en continu ainsi que deux marches arrière (R1, R2) se forment par une attribution des rapports de vitesses (V1 - V6) adjacents aux différents embrayages couplables sous charge (K1, K2) respectifs.

2. Boîtes de vitesses à engrenages selon la revendication 1, **caractérisée en ce que** les deux plans d'engrenage (E1, E2) sont conçus pour constituer conjointement au moins un rapport de vitesses avant (V6), et dans ledit rapport de vitesses avant (V6) un plan d'engrenage (E1) sert de constante d'entrée et l'autre plan d'engrenage (E2) sert à transmettre la puissance d'entraînement à l'arbre de transmission (19).

3. Boîte de vitesses à engrenages selon la revendication 1 ou 2, **caractérisée en ce qu'**un plan d'engrenage (Z3) est conçu, en combinaison avec l'une des constantes d'entrée (E1, E2), pour former au moins deux rapports de vitesses avant (V1, V2) démultipliés de manière différente.

4. Boîte de vitesses à engrenages selon l'une quelconque des revendications précédentes, **caractérisée par** au moins deux marches arrière (R1, R2) démultipliées de manière différente.

5. Boîte de vitesses à engrenages selon la revendication 4, **caractérisée en ce que** les marches arrière (R1, R2) sont conçues du fait qu'un plan d'engrenage (Z4) qui comprend un inverseur (27), qui en combinaison avec chacune des constantes (EI, E2) d'entrée, peut fonctionner.

6. Boîte de vitesses à engrenages selon la revendication 4 ou 5, **caractérisée en ce que** les marches arrière (R1, R2) sont couplables sous charge séquentiellement.

7. Boîte de vitesses à engrenages selon l'une quelconque des revendications précédentes, **caractérisée en ce que** l'ensemble des écarts à partir d'un second rapport de vitesse avant (V2) est décroissant en direction des rapports de vitesse avant (V2 V6) plus élevés.

8. Boîte de vitesses à engrenages selon l'une quelconque des revendications 1 à 6, **caractérisée en ce que** l'ensemble des sauts à partir d'un second rapport de vitesse avant (V2) est partiellement décroissant et partiellement constant en direction des rapports de vitesse avant (V2, V6) plus élevés.

9. Boîte de vitesses à engrenages selon l'une quelconque des revendications 1 à 6, **caractérisée en ce que** l'ensemble des écarts entre deux rapports de vitesse avant (V1, V6) adjacents est à peu près constant.

10. Boîte de vitesses selon l'une quelconque des revendications précédentes, **caractérisée par** un dispositif de réglage et / ou de commande (40) qui est conçu pour coupler et / ou séparer en parallèle au moins deux rapports de vitesse (V1, V2) dont l'un faisant partie du groupe des rapports de vitesse rectilignes (V2, V4, V6) et un autre du groupe des rapports de vitesse non rectilignes (V1, V3, V5)

11. Boîte de vitesses à engrenages selon la revendication 10, **caractérisée en ce que** le dispositif de commande et / ou de réglage (40) est conçu, en fonction d'au moins un paramètre, pour sélectionner et / ou coupler au moins un rapport de vitesse (V1).
